# EUROPEAN PATENT SPECIFICATION

(11) **EP 2 622 028 B1**
(45) Date of publication and mention of the grant of the patent: **09.11.2016**
(21) Application number: 11771333.9
(22) Date of filing: 30.09.2011
(51) Int. Cl.: C09D 5/00

(54) **A METHOD FOR USING A PRIMER COMPRISING A SELF-EMULSIFIED POLYESTER MICROGEL**
VERFAHREN ZUR VERWENDUNG EINER GRUNDIERUNG MIT EINEM SELBSTEMULGIERTEN POLYESTERMIKROGEL
PROCÉDÉ D'UTILISATION D'UN PRIMAIRE COMPRENANT UN MICROGEL DE POLYESTER AUTO-ÉMULSIFIÉ

(30) Priority: 01.10.2010 US 896166
(43) Date of publication of application: 07.08.2013
(73) Proprietor: PPG Industries Ohio, Inc., Cleveland, OH 44111 (US)
(72) Inventor: VERARDI, Christopher A., Pittsburgh Pennsylvania 15237 (US); MELI, Michele L., Ambridge Pennsylvania 15003 (US); LAMERS, Paul, Allison Park Pennsylvania 15101 (US)
(74) Representative: f & e patent
(86) International application number: PCT/US2011/054260
(87) International publication number: WO 2012/044954

(56) References cited:
- EP-A1- 1 914 282
- WO-A1-03/085039
- WO-A1-2007/110324
- WO-A2-2006/031691

## Description

### FIELD OF THE INVENTION

The present invention relates to methods for coating substrates, and, particularly, to composite coatings including a primer layer, basecoat, and optionally a clearcoat, which are applied in a wet-on-wet-on-wet process. The primer layer comprises a self-emulsified polyester microgel comprising a polyester-melamine microgel.

### BACKGROUND OF THE INVENTION

In the automotive industry, a coating system that provides a good balance between economy, appearance, and physical properties is a system having four individual coating layers. The first coating is a corrosion resistant layer, which is typically applied by electrodeposition and cured. The next coating is a primer/surfacer, which is spray applied and then cured. The third coating is a spray-applied colored basecoat. The basecoat is generally not cured before the application of the final coating, the clear coat, which is designed to provide toughness and high gloss to the system. The process of applying one layer of a coating before the previous layer is cured is referred to as a wet-on-wet ("WOW") application.

The automotive industry would derive a significant economic advantage from an inexpensive coating process that provides a coated substrate having good adhesion, chip resistance, and/or smoothness, yet that can be applied wet-on-wet, or even wet-on-wet-on-wet ("WOWOW").

### SUMMARY OF THE INVENTION

The present invention provides a method for coating a substrate, comprising: a) applying a primer coating composition onto at least a portion of a substrate, wherein the primer coating composition comprises a self-emulsified polyester microgel comprising a polyester-melamine microgel; b) applying a second coating composition to at least a portion of the substrate coated with the primer coating composition of component (a) without first substantially curing the primer coating composition of component (a); c) optionally, applying a third coating composition to at least a portion of the substrate coated with the coating composition of component (b) without first substantially curing (a) and/or (b); and d) substantially curing the coating compositions of components (a), (b) and, if used, (c).

The present invention also provides a multilayer coating system comprising: a) a primer coating composition applied to at least a portion of a substrate, wherein the primer coating composition comprises a self-emulsified polyester microgel comprising a polyester-melamine microgel; b) a second coating composition applied to at least a portion of the substrate coated with the primer coating composition of component (a) without first substantially curing the primer coating composition of component (a); c) optionally, a third coating composition applied to at least a portion of the substrate coated with the coating composition of component (b) without first substantially curing (a) and/or (b); d. substantially curing the coating compositions of components (a), (b) and, if used, (c).

### DETAILED DESCRIPTION OF THE INVENTION

The present invention provides methods for coating a substrate using wet-on-wet or wet-on-wet-on-wet procedures. More specifically, the methods comprise a first step of applying a primer coating composition to at least a portion of the surface of a substrate and then, without substantially curing the primer, applying a second coating composition. Optionally, a third coating composition is applied in a "wet-on-wet-on-wet" type of application process to the substrate coated with the primer and second coat. The applied coating compositions are all cured simultaneously to provide a multilayer coating system.

In certain methods of the present invention, a primer coating is applied to at least a portion of the substrate. In certain embodiments, the primer coating is aqueous. The substrate can be pretreated and/or electrocoated, as discussed below, using methods standard in the art prior to application of the primer. The primer coating composition comprises a self-emulsified polyester microgel comprising a polyester-melamine microgel. As used herein, the term "self-emulsified" means that the microgel has sufficient ionic and/or hydrophilic character to allow it to form a stable dispersion in water without the use of added stabilizers such as surfactants. In a stable dispersion, the dispersed phase will remain dispersed, i.e., the particles will not coagulate or settle, for an extended period of time, such as at least six months at ambient temperature. As used herein, the term "microgel" refers to an aqueous dispersion of internally crosslinked polymer microparticles. In some embodiments, the self-emulsified polyester microgel is insoluble in organic solvents such as tetrahydrofuran, while in other embodiments it may be at least partially soluble in such solvents.

According to the present invention, the self-emulsified polyester microgel comprises a self-emulsified polyester-melamine microgel. The self-emulsified polyester-melamine microgel comprises a polyester, which has two or more hydroxyl groups and a plurality of carboxylic acid groups.

The polyester of the self-emulsified polyester-melamine microgel can be prepared from polyols and polycarboxylic acids and/or anhydrides using methods known to those skilled in the art. A polyol will be understood by those skilled in the art as a compound having two or more hydroxyl groups. Suitable polyols can include ethylene glycol; 1,2- and 1,3-propanediol; 2-methyl-1,3-propanediol; 1,3- and 1,4-butanediol; 1,6-hexanediol; 1,4-cyclohexane dimethanol; neopentyl glycol; trimethylolpropane; glycerin; and pentaerythritol. Any suitable mono- or polycarboxylic acid/anhydride can be used according to the present invention. It will be understood by those skilled in the art that a polycarboxylic acid is one that has two or more acid functional groups, or residues thereof, such as anhydride groups. Suitable monocarboxylic acids include benzoic acid, nonanoic acid, and fatty acids such as those that are derived from natural sources, for example coconut oil fatty acid, tall oil fatty acid, isomerginic acid, soya oil fatty acid, and castor oil fatty acid. Suitable polycarboxylic acids/anhydrides include phthalic acid/anhydride, adipic acid/anhydride, cyclohexanedicarboxylic acid, isophthalic acid, terephthalic acid, trimellitic anhydride, the C36 dimer fatty acids, maleic acid/anhydride, and fumaric acid/anhydride.

As discussed above, the polyester contains a plurality of carboxylic acid groups. It will be understood by those skilled in the art that a sufficient number of carboxylic acid groups should be present within the polyester structure to allow the polyester-melamine microgel formed from the polyester to be stable as a dispersion in water when neutralized at least partially by a base. The desired number of carboxylic acid groups, and the desired amount of neutralization of those acid groups, can be determined by standard methods known by practitioners in the field. In certain embodiments, a suitable acid value for the polyester can be 22 to 42, such as 28 to 36, where the number refers to the number of milligrams of potassium hydroxide required to neutralize one gram of polyester, as determined by titration. In certain embodiments, the polyester also contains another reactive functional group or groups, such as hydroxyl groups, to allow the polyester-melamine microgel to react with crosslinkers that may be added to the primer coating composition when it is formulated.

The polyester of the polyester-melamine microgel can be optionally dissolved in an organic solvent prior to formation of the microgel. Suitable organic solvents include acetone, butanone and 4-methyl-2-pentanone. In some embodiments, the solvent is a volatile solvent or mixture of solvents that can be distilled from the microgel after it has been formed.

The melamine of the polyester-melamine microgel can be any type of aminoplast crosslinking resin, such as the melamine resins that are available commercially under the CYMEL trade name from Cytec Industries Inc. Suitable versions of melamine crosslinkers can be, for example, those that are classified as methylated, high-imino melamine derivatives such as those that are sold under the trade name of CYMEL 327.

The polyester-melamine microgel can be formed from the above polyester and melamine resin using methods standard in the art. In certain embodiments, the melamine is dissolved in the polyester and the optional organic solvent and mixed until it is incorporated. The ratio of the polyester to the melamine can vary from 50:50 to 90:10, such as from 60:40 to 80:20. The mixture is inverted into the aqueous phase by neutralizing at least a portion of the acid groups of the polyester and adding water. The neutralizing agent can be a water soluble base such as an amine. Suitable amines are well-known to those skilled in the art and include triethylamine, dimethylethanolamine, N,N-dimethyldodecylamine, diisopropylamine, triethanolamine, and diethylethanolamine. The degree of neutralization can be from 40% to 100%, such as from 60% to 100%. The neutralizing amine may be added either before or during the addition of the water, and it may be added in portions. The amine and water (combined or sequentially) may be added to the solution of the polyester and melamine resins, or the resin solution may be added to the amine and water. In the latter case, the amine may be added to the resin solution before it is added to the water, or the resin solution may be added to a solution of the amine in water. In certain embodiments, the microgel is formed without the use of a MICROFLUIDIZER high pressure impingement emulsifier (available from Microfluidics Corporation in Newton, Massachusetts) or any other high-stress technique.

The aqueous dispersion thus obtained is held at elevated temperatures to allow the crosslinking reaction between the melamine resin and the polyester resin to take place. A suitable reaction temperature is typically 50 °C to 100 °C, such as 70 °C to 100 °C. The progress of the reaction may be monitored by viscosity measurements and/or by turbidity measurements. An increase in viscosity and/or turbidity indicates an increase in the molecular weight of the polymer mixture, which is the result of the internal crosslinking reaction and formation of the microgel particles. A reaction endpoint may be indicated when there is no further change in the viscosity and/or turbidity measurement of the reaction mixture samples with time. The optional organic solvent(s) may be distilled from the reaction mixture, using a vacuum if necessary, after the microgel is formed. Upon completion of the reaction, the polymer may be further neutralized with additional amine, such as up to 100% if the prior degree of neutralization was less than 100%.

While the inventors do not wish to be bound by any particular theory, it may be that the presence of the self-emulsified polyester microgel in the primer coating composition improves the "hold-out" of the subsequently applied coating composition (b). As used herein, the term hold-out refers to preventing or minimizing significant mixing between a first applied uncured coating composition and the subsequently applied uncured coating composition(s), i.e., the layers remain largely separate and distinct. Thus, the present invention allows for maintenance of separate and distinct layers in a wet-on-wet, or wet-on-wet-on-wet, application. A coating system that does not have good hold-out between the layers may have poor appearance, such as "mud-cracking", which is evidenced by small cracks or fissures on the surface of the coating, or by consistency of shortwave appearance over a range of processing conditions.

The self emulsified polyester microgel comprising a polyester-melamine microgel can be used in the primer coating composition in any amount desired by the user. In certain embodiments, it can range from 20% to 80% by weight on a basis of total resin solids of the primer coating composition, such as from 40% to 60%.

The primer coating composition comprising the self-emulsified polyester microgel comprising a polyester-melamine microgel may further comprise an additional aqueous polymeric resin such as a polyurethane resin, a polyester-polyurethane resin, a thermosettable dispersion, or combinations thereof. For example, the additional aqueous polymeric resin can be a polyurethane dispersion such as that described in Example 1 of United States Patent Number 7,709,093. An example of a thermosettable dispersion is described in United States Patent Number 6,180,181 (column 3, line 26 through column 13, line 8). The thermosettable dispersion can comprise microparticles comprising (a) an acid functional reaction product of ethylenically unsaturated monomers, and (b) a hydrophobic polymer having a number average molecular weight of at least 500. In certain embodiments, the hydrophobic polymer has an acid value of less than 20. The total amount of the additional aqueous polymeric resins can be, for example, from 5% to 60% by weight on a basis of total resin solids of the primary coating composition, such as from 12% to 40%, although higher or lower amounts could also be used.

In addition to the self-emulsified polyester microgel comprising a polyester-melamine microgel, the primer coating composition can also comprise one or more crosslinking materials capable of reacting with the functional groups of the self-emulsified polyester microgel to form a cured film. Any suitable crosslinking material may be used. Suitable crosslinking materials include aminoplasts and polyisocyanates, and mixtures thereof. Useful aminoplast resins may be based on the addition products of formaldehyde with an amino- or amido-group carrying substance. In one embodiment, the crosslinker is a methylated, high-imino melamine derivative such as that which is sold under the trade name of CYMEL 325.

While the aldehyde employed may be formaldehyde, other similar condensation products can be made from other aldehydes, such as acetaldehyde, crotonaldehyde, acrolein, benzaldehyde, furfural, glyoxal, and the like.

Condensation products of other amines and amides can also be used, for example, aldehyde condensates of triazines, diazines, triazoles, guanadines, guanamines, and alkyl- and aryl-substituted derivatives of such compounds, including alkyl- and aryl-substituted ureas and alkyl- and aryl-substituted melamines. Examples of such compounds include N,N'-dimethyl urea, benzourea, dicyandiamide, formaguanamine, acetoguanamine, glycouril, ammeline, 3,5-diaminotriazole, triaminopyrimidine, 2-mercapto-4,6-diaminopyrimidine and carbamoyl triazines of the formula C₃N₃(NHCOXR)₃ where X is nitrogen, oxygen or carbon and R is a lower alkyl group having from one to twelve carbon atoms or mixtures of lower alkyl groups, such as methyl, ethyl, propyl, butyl, n-octyl, and 2-ethylhexyl. Such compounds and their preparation are described in detail in United States Patent Number 5,084,541 (column 2, line 50 through column 7, line 63) incorporated by reference in pertinent part herein.

The aminoplast resins may contain methylol or similar alkylol groups, and at least a portion of these alkylol groups may be etherified by reaction with an alcohol. Any monohydric alcohol can be employed for this purpose, including methanol, ethanol, pentanol, hexanol, heptanol, as well as benzyl alcohol and other aromatic alcohols, cyclic alcohols such as cyclohexanol, monoethers of glycols, and halogen-substituted or other substituted alcohols such as 3-chloropropanol and butoxyethanol.

Any suitable polyisocyanate may be used as a crosslinking agent. The polyisocyanate can be prepared from a variety of isocyanate-containing materials and can be a blocked polyisocyanate. Examples of suitable polyisocyanates include trimers prepared from the following diisocyanates: toluene diisocyanate, 4,4'-methylene-bis(cyclohexyl isocyanate), isophorone diisocyanate, an isomeric mixture of 2,2,4- and 2,4,4-trimethyl hexamethylene diisocyanate, 1,6-hexamethylene diisocyanate, tetramethyl xylylene diisocyanate and 4,4'-diphenylmethylene diisocyanate. In addition, blocked polyisocyanates can be used. Examples of suitable blocking agents include those materials that would unblock at elevated temperatures such as lower aliphatic alcohols including methanol, oximes such as methyl ethyl ketoxime, lactams such as caprolactam and pyrazoles such as dimethylpyrazole.

The amount of the crosslinking material used can vary. In certain embodiments, it can range from 5% to 50% by weight on a basis of total resin solids of the primer coating composition, such as from 10% to 25%.

In certain embodiments, the primer coating composition may contain catalysts to accelerate the crosslinking reaction. Suitable catalysts for aminoplast cure may be selected from those known in the art and may include acids such as acid phosphates and sulfonic acid or a substituted sulfonic acid. Examples include dodecylbenzene sulfonic acid, paratoluene sulfonic acid, and the like. Suitable catalysts for isocyanate cure include organotin compounds such as dibutyltin oxide, dioctyltin oxide, dibutyltin dilaurate and the like. The catalyst may be present in varying amounts. In certain embodiments, the catalyst may be present in the amount of 0.05% to 5.0% by weight on a basis of total resin solids of the primer coating composition, such as from 0.08% to 2.0%.

In certain embodiments, additional ingredients such as pigments and fillers can be present in the primer coating composition. Any suitable pigments and fillers may be used. Useful pigments include hiding pigments such as titanium dioxide, zinc oxide, antimony oxide, etc. and organic or inorganic UV opacifying pigments such as iron oxide, transparent red or yellow iron oxide, carbon black, phthalocyanine blue, and the like. Useful fillers include barium sulfate, magnesium silicate, calcium carbonate, and silica. The amount of fillers and pigments can vary. In certain embodiments, the fillers and pigments may be present in the amount of 20% to 80% by weight on a basis of total solids of the primer coating composition, such as from 30% to 60%.

The primer coating composition can contain, in addition to the components described above, a variety of other optional materials. Such materials may include antioxidants, UV-absorbers and hindered amine light stabilizers such as hindered phenols, benzophenones, benzotriazoles, triazoles, triazines, benzoates, piperidinyl compounds and mixtures thereof. These materials may be added in any suitable amount. In certain embodiments, these materials may be added in amounts of 4% or less by weight on a basis of total solids of the primer coating composition. Other optional materials may include cosolvents, coalescing agents, neutralizing amines, defoamers, plasticizers, associative thickeners, bactericides and the like.

In certain embodiments, the primer composition exhibits some level of UV durability, which can be achieved through any means known in the art, such as the use of appropriate additives, the use of UV-durable film formers, and/or selection of monomers for use in the polyester microgel that are known to impart UV durability, such as aliphatic, rather than aromatic, monomers. In some embodiments, the polyester microgel comprises greater than 40 wt%, such as greater than 60 wt%, aliphatic monomers.

The primer coating composition comprising the self-emulsified polyester microgel may be applied onto the surface of the substrate, by any suitable coating process known to those skilled in the art. For example, the primer coating composition may be applied by dip coating, direct roll coating, reverse roll coating, curtain coating, spray coating, brush coating, electrostatic spray coating, and combinations thereof. The method and apparatus for applying the coating composition to the substrate is determined in part by the configuration and type of substrate material.

After application of the primer coating composition to the substrate, the composition can be at least partially dried by evaporating water and solvent (if present) from the surface of the film by air drying at ambient temperature (25 °C) or an elevated temperature for a period of time sufficient to dry the film but not significantly crosslink the components of the composition.

After the primer coating composition has been applied to the substrate and optionally dried (but not cured), a second coating composition is applied to at least a portion of the substrate coated with the primer coating composition. In certain embodiments, the second coating composition is a basecoat. The second coating composition may be a conventional basecoat coating composition as described, for example, in United States Patent Numbers 7,709,093 (column 19, lines 56-60 and column 20, lines 22-43) and 6,180,181 (column 16, lines 18-33). Other suitable compositions may include those formulations commercially available from PPG Industries, Inc. as HWB and DWB. The second coating composition can include crosslinking materials, pigments, and additional ingredients such as those described above for the primer coating composition, or further described in United States Patent Number 7,776,959 (column 4, line 38 through column 5, line 59). In certain embodiments, the basecoat may be transparent or semi-transparent and/or may contain colorants such as effect pigments. As used herein, the phrase "transparent or semi-transparent" refers to coating layers and/or colorants used therein, such as pigments, with a haze of at least 5%. In certain embodiments of the present invention, the transparent or semi-transparent coatings/pigment has a haze of 5 up to 55%, or, in other embodiments, 10 up to 55%. Haze is a measurement of the transparency of a material and is defined by ASTM D1003. In such embodiments, some level of UV durability may be desired in the primer layer.

After application of the second coating, it can be at least partially dried by evaporating water and solvent (if present) from the surface of the film by air drying at ambient temperature (25 °C) or an elevated temperature for a period of time sufficient to dry the film but not significantly crosslink the components of the composition.

In an embodiment of the method of the present invention, after the second coating composition has been applied to the substrate coated with the primer coating composition and optionally dried (but not cured), a third coating composition may be applied to at least a portion of the substrate coated with the second coating composition. In certain embodiments, the third coating composition is a clearcoat. Examples of suitable clearcoat compositions include those described in United States Patent Numbers 5,098,947 (column 3, line 9 through column 8, line 59), 5,196,485 (column 2, line 13 through column 10, line 47), 5,814,410 (column 4, line 51 through column 9, line 57), and 5,663,240 (column 2, line 10 through column 5, line 7). The third coating composition can include crosslinking materials, abrasion resistant particles such as those described in United States Patent Number 7,053,149 (column 19, line 50 through column 24, line 29), and additional ingredients such as those described above for the primer coating composition but typically not colorants that would render the coating opaque.

In those embodiments where a third coating composition has been applied to the substrate on at least a portion of the second coating composition, the substrate coated with the primer and subsequent coating compositions is heated to cure the coating compositions. In the curing operation, water and/or solvents are evaporated from the surface of the coating and the crosslinking reaction takes place. In certain embodiments, the heating or curing operation may be carried out at a temperature in the range of 71 °C to 177 °C for 20 to 40 minutes. Lower or higher temperatures can be used as necessary to activate crosslinking mechanisms. The thickness of the dried and crosslinked coating system can vary. In certain embodiments, the thickness of the dried and crosslinked coating system may be from 0.2 to 5 mils (5 to 125 micrometers), or from 0.4 to 10 mils (10 to 250 micrometers)

In other embodiments, the second coating composition is a monocoat. The monocoat coating composition may be a conventional coating composition such as that described above for the basecoat, but one in which a subsequent clear coat is not typically used. After application of the second coating, the substrate coated with the primer and second coating compositions is heated to cure the coating compositions. The curing operation may take place as described above for the case where the second coating is a basecoat. The thickness of the dried and crosslinked coating system can vary. In certain embodiments, the thickness of the dried and crosslinked coating system may be from 0.2 to 5 mils (5 to 125 micrometers), or from 0.4 to 10 mils (10 to 250 micrometers).

Use of the self-emulsified polyester microgel according to the method of the present invention may provide coating systems which, when cured, have one or more desirable properties such as good appearance (smoothness) and/or color control, good adhesion to the substrate, and/or chip resistance.

Accordingly, the present invention is also directed to a multilayer coating system comprising the primer layer, the second coating and the optional third coating as described herein.

Any substrate can be coated according to the method of the present invention. Suitable substrates can be formed from inorganic or metallic materials, thermoset materials, thermoplastic materials, and combinations thereof. The metal substrates coated by the methods of the present invention can include ferrous metals such as iron, steel, and alloys thereof, non-ferrous metals such as aluminum, zinc, and alloys thereof, and combinations thereof.

Before depositing the coatings upon the surface of the metal substrate according to the present invention, it may be desired to remove foreign matter from the metal surface by thoroughly cleaning and degreasing the surface by physical or chemical means such as are well know to those skilled in the art. A pretreatment coating, such a BONAZINC zinc-rich pretreatment (commercially available from PPG Industries, Inc.), can be deposited upon at least a portion of the surface of the metal substrate.

An electrodeposited coating is typically applied to the surface of an electroconductive substrate such as a metal substrate prior to applying the primer coating composition described above. Useful electrodepositable coating compositions include conventional anionic or cationic electrodepositable coating compositions. Methods for electrodepositing coatings are well known to those skilled in the art. Useful compositions and methods are discussed, for example, in United States Patent Number 5,530,043 (relating to anionic electrodeposition) and United States Patent Numbers 5,760,107; 5,820,987 and 4,933,056 (relating to cationic electrodeposition).

Useful thermoset materials include polyesters, epoxides, phenolics, polyurethanes and mixtures thereof. Useful thermoplastic materials include polyolefins, polyamides, thermoplastic polyurethanes, thermoplastic polyesters, acrylic polymers, vinyl polymers, copolymers and mixtures thereof.

Substrates coated according to the present invention can be, for example, automobile parts. The thickness of the substrate can vary as desired. Many load-bearing components of automobile bodies are formed from metal substrates, and these may include body panels, doors, fenders, hoods, or bumpers. Automobile parts typically formed from thermoplastic and thermoset materials include bumpers and trim. It is desirable to have a coating system which can be applied to both metal and non-metal parts.

As used herein, unless otherwise expressly specified, all numbers such as those expressing values, ranges, amounts or percentages may be read as if prefaced by the word "about", even if the term does not expressly appear. Plural encompasses singular and vice versa. For example, while the invention has been described in terms of "a" self-emulsified polyester microgel, "a" polyester-melamine microgel, "a" polyester-acrylic microgel, and the like, mixtures of these and other components, including mixtures of microparticles, can be used. Also, as used herein, the term "polymer" is meant to refer to prepolymers, oligomers and both homopolymers and copolymers; the prefix "poly" refers to two or more. When ranges are given, any endpoints of those ranges and/or numbers of subranges within those ranges can be combined in any combination within the scope of the present invention. "Including", "such as", "for example" and like terms means "including/such as/for example but not limited to".

### EXAMPLES

The present invention will be further described by reference to the following examples that are merely illustrative of the invention and are not intended to limit the invention to the specifics of the examples. Unless otherwise indicated, all parts are by weight.

### Example A

A polyester was prepared from the following ingredients:

| | **Raw Material** | **Amount (g)** |
|---|---|---|
| Chg 1 | Isomerginic acid SF¹ | 658 |
| | Trimethylolpropane | 333.4 |
| | 1,6-Hexanediol | 153 |
| | Phthalic anhydride | 278.4 |
| | | |
| Chg 2 | Trimellitic anhydride | 182.6 |
| | | |
| Chg 3 | Methylisobutylketone | 394 |

| | | |
|---|---|---|
| ¹Isomerginic acid SF is available from Harburger Fettchemie and is mixture of fatty acids containing approx 60% of conjugated diene substituted C₁₈ fatty acid. | | |

To a four necked, 2 liter reaction flask outfitted with a stirrer, gas inlet, thermometer and condenser was added the contents of Chg 1. The reaction mixture was heated in stages to 230°C and held until the acid value was below 5. A slow nitrogen stream helped removed the water condensate. As soon as an acid number <5 was reached, the reaction was cooled to <150° C. Chg 2 was then added and the reaction mixture was heated to 190°C, and the acid value was measured every 30 minutes. Upon reaching an acid value of 32, the reaction mixture was cooled to 110°C and then thinned with Chg 3. The resulting resin had a solids content of 80%.

### Example B

A polyester-melamine microgel in accordance with the invention was prepared from the following ingredients:

| | **Raw Material** | **Amount (g)** |
|---|---|---|
| Chg 1 | Polyester from Example A | 219.8 |
| | | |
| Chg 2 | CYMEL 327² | 83.6 |
| | | |
| Chg 3 | Dimethylethanolmine (DMEA) | 5.6 |
| | Deionized (DI) Water | 106 |
| | | |
| Chg 4 | DI Water | 355 |
| | | |
| Chg 5 | DMEA | 1.82 |
| | DI Water | 122 |
| | | |
| Chg 6 | DI Water | 57 |

| | | |
|---|---|---|
| ²CYMEL 327 is a methylated, high imino melamine derivative available from Cytec Industries, Inc. | | |

To a 1 liter jacketed reaction vessel outfitted with a stirrer, gas inlet, thermometer and condenser was added the contents of Chg 1. Chg 2 was added under agitation to ensure homogeneity. The amount of DMEA in Chg 3 was calculated at 80% total neutralization based upon the acid value of the starting polyester. Chg 3 was then added and stirred for 5 minutes followed by the addition of Chg 4. The reaction mixture was heated to 88°C. Upon reaching 88°C, a sample was removed and the viscosity measured with a rotational viscometer. The measured viscosity increased as the reaction proceeded.

When a viscosity of 4000 mPas was reached, the temperature was reduced to 55°C and the methylisobutylketone was removed under vacuum. Chg 5 & 6 were then added to fully neutralize the resin and reduce the solids to 25%.

### Example 1

### Primer coating composition using Polyester-Melamine Microgel

A primer coating composition in accordance with the invention was prepared from the following ingredients. Pigment dispersions available commercially from PPG Industries Inc. were first blended in a suitable vessel for waterborne material.

| **Material** | **Amount (g)** |
|---|---|
| 86T62-9166 TiO2 tinting paste available from PPG Ind. Inc. | 175.43 |
| 86B2792 Carbon Black Tinting Paste available from PPG Ind. Inc | 43.85 |

These ingredients were mixed for 15 minutes, and the following ingredients were added with agitation:

| **Material** | **Amount (g)** |
|---|---|
| CYMEL 325⁶ | 21.25 |
| Propylene glycol | 5.00 |
| Ethylene glycol monohexyl ether | 3.30 |
| ISOPAR K MINERAL SPIRIT⁷ | 3.80 |
| Diethylene glycol monobutyl ether | 4.90 |

| | |
|---|---|
| ⁶CYMEL 325 is a methylated, high imino melamine derivative, available from Cytec Industries, Inc. ⁷ISOPAR K MINERAL SPIRIT, available from ExxonMobil Chemical Company. | |

This mixture was agitated for 15 minutes and the following resinous binders were added:

| **Material** | **Amount (g)** |
|---|---|
| Polyester-melamine Microgel of Example B | 157.92 |
| Polyurethane dispersion (prepared as described in U.S. 7,709,092, Example 1) | 51.68 |
| Deionized water | 12.67 |
| Dimethyl ethanol amine (50% solution in deionized water) | 1.33 |

The viscosity of the sample was 21 seconds #4 Ford with a pigment to binder ratio of 1.09/1 and solids of 43.42%. The pH of the sample was 8.57.

The primer coating compositions of the example were tested in a wet-on-wet-on-wet (WOWOW) system versus a water based control. The water based control primer was JWPW8110, which is commercially available from PPG Kansai Automotive Finishes. The test substrates were ACT cold rolled steel panels, 10.16 cm by 30.48 cm (4 inch by 12 inch), electrocoated with a cationically electrodepositable coating commercially available from PPG Industries, Inc., as ED6060. The primer coating composition of the example and the water based control were spray applied (1 coat automated spray at 0.8 mils) to the panels at 60% relative humidity and 21° C. One set of panels was kept at ambient temperature (25° C) for 5 minutes prior to applying the basecoats ("Ambient Flash" in Table 1). A second set of panels was partially dehydrated by flashing at 80° C for 5 minutes prior to application of the basecoats ("Heated Flash" in Table 1).

All of the panels were then coated (2 coats automated spray at 14 µm (0.55 mils)) with a light blue metallic basecoat known as JWBW8R3 (commercially available from PPG Kansai Automotive Finishes). The panels were flash baked for 5 minutes at 80° C and then coated (2 coats automated spray at 48µm (1.9 mils)) with a clearcoat, Kino JCC1200 (commercially available from PPG Kansai Automotive Finishes). The panels were baked for 10 minutes at 110° C and then for 20 minutes at 140° C.

The solvent based control panel was coated with a primer coating, FCP6519, available from PPG Kansai Automotive Finishes and then baked for 30 minutes at 140 °C to completely cure the coating. The base coat and clear coat were then applied as described above for the water based control and the example compositions.

The smoothness of the clearcoats was measured using a Byk Wavescan in which results are reported as long wave and short wave numbers where lower values means smoother films. The following Table 1 provides the measured properties.

**TABLE 1**

| Example | Can Solids¹⁴, % | Spray Solids¹⁵, % | Flash Type | Long wave | Short wave |
|---|---|---|---|---|---|
| SB Control | 60.0 | 65.7 | Fully cured | 4 | 26 |
| WB Control | 44.8 | 47.1 | Ambient¹⁶ | 6 | 34 |
| | | | heated¹⁷ | 5 | 30 |
| Example 1 | 43.4 | 50.5 | ambient | 5 | 28 |
| | | | heated | 5 | 28 |

| | | | | | |
|---|---|---|---|---|---|
| ¹⁴ Can solids are measured on the liquid coating formula. The preweighed sample is heated in a foil pan at 110 °C for 60 min and the % nonvolatile material is calculated. ¹⁵ Spray solids are measured on a coating sample that has been spray applied to a 4" x 4" foil square and flashed at ambient temperature (25 °C) for 5 minutes. The coated substrates are heated at 140 °C for 30 minutes and the % nonvolatile material is calculated. ¹⁶ Ambient flash panels were kept at ambient temperature (25° C) for 5 minutes prior to applying the basecoats. ¹⁷ Heated flash panels were heated at 80° C for 5 minutes prior to application of the basecoats. | | | | | |

As shown in Table 1, each of the examples 1-3 have smoothness comparable to the solvent based control and better than the water based control, with either an ambient or a heated flash. The solids of examples 1-3 are all higher than the water based control, with that of Example 3 comparable to the solvent based control.

## Claims

1. A method for coating a substrate, comprising:
a. applying a primer coating composition onto at least a portion of a substrate, wherein the primer coating composition comprises a self-emulsified polyester microgel comprising a polyester-melamine microgel;
b. applying a second coating composition to at least a portion of the substrate coated with the primer coating composition of component (a) without first substantially curing the primer coating composition of component (a);
c. optionally, applying a third coating composition to at least a portion of the substrate coated with the coating composition of component (b) without first substantially curing (a) and/or (b);
d. substantially curing the coating compositions of components (a), (b) and, if used, (c).

2. The method of Claim 1, wherein one or more of the coating compositions of (a), (b) and (c), if used, is waterborne.

3. The method of Claim 1, wherein
a) the polyester of the polyester-melamine microgel comprises a reaction product comprising isomerginic acid, trimethytol propane, 1,6-hexanediol, phthalic anhydride, and/or trimellitic anhydride; or
b) the polyester comprises acid functionality, or
c) the melamine of the polyester-melamine microgel comprises a methylated, high-imino melamine derivative.

4. The method of Claim 1, wherein the coating composition of component (a) further comprises a thermosettable dispersion.

5. The method of Claim 4, wherein the thermosettable dispersion further comprises an additional microgel that is different from the self-emulsified polyester microgel of (a).

6. The method of Claim 5, wherein the additional microgel comprises polymeric microparticles comprising a reaction product comprising:
i. at least one acid functional reaction product of ethylenically unsaturated monomers; and
ii. at least one hydrophobic polymer having a number average molecular weight of at least 500.

7. The method of claim 1, wherein the primer coating composition comprises a pigment grind vehicle that comprises the self-emulsifed polyester microgel.

8. A multilayer coating system comprising
a. a primer coating composition applied to at least a portion of a substrate, wherein the primer coating composition comprises a self-emulsified polyester microgel comprising a polyester-melamine microgel;
b. a second coating composition applied to at least a portion of the substrate coated with the primer coating composition of component (a) without first substantially curing the primer coating composition of component (a);
c. optionally, a third coating composition applied to at least a portion of the substrate coated with the coating composition of component (b) without first substantially curing (a) and/or (b);
whereby the coating compositions of components (a), (b) and, if used, (c) are substantially cured.

9. The multilayer coating system of Claim 8, wherein the second coating is transparent or semi-transparent.

## Patentansprüche

1. Verfahren zur Beschichtung eines Substrats, umfassend:
a. Aufbringen einer Grundierbeschichtungszusammensetzung auf wenigstens einem Teil eines Substrats, wobei die Grundierbeschichtungszusammensetzung ein selbstemulgierendes Polyestermikrogel enthält, das ein Polyester-Melamin-Mikrogel enthält,
b. Aufbringen einer zweiten Beschichtungszusammensetzung auf wenigstens einem Teil des Substrats, das mit der Grundierbeschichtungszusammensetzung der Komponente (a) beschichtet ist, ohne zuerst die Grundierbeschichtungszusammensetzung der Komponente (a) wesentlich zu härten,
c. wahlweise Aufbringen einer dritten Beschichtung auf wenigstens einem Teil des Substrats, das mit der Beschichtungszusammensetzung der Komponente (b) beschichtet ist, ohne zuerst (a) und/oder (b) wesentlich zu härten,
d. im Wesentlichen Härten der Beschichtungszusammensetzungen der Komponenten (a), (b) und, wenn verwendet, (c).

2. Verfahren nach Anspruch 1, wobei eine oder mehrere der Beschichtungszusammensetzungen von (a), (b) und (c), falls verwendet, auf Wasserbasis sind.

3. Verfahren nach Anspruch 1, wobei
(a) der Polyester des Polyester-Melamin-Mikrogels ein Reaktionsprodukt, enthaltend Isomerginsäure, Trimethoylolpropan, 1,6-Hexandiol, Phthalsäureanhydrid oder Trimellitsäureanhydrid, enthält oder
(b) der Polyester Säurefunktionalität aufweist oder
(c) das Melamin des Polyester-Melamin-Mikrogels ein methyliertes Melaminderivat mit hohem Iminoanteil enthält.

4. Verfahren nach Anspruch 1, wobei die Beschichtungszusammensetzung der Komponente (a) zusätzlich eine thermisch härtende Dispersion enthält.

5. Verfahren nach Anspruch 4, wobei die thermisch härtende Dispersion ferner ein zusätzliches Mikrogel enthält, das sich von dem selbstemulgierenden Polyestermikrogel aus (a) unterscheidet.

6. Verfahren nach Anspruch 5, wobei das zusätzliche Mikrogel Polymeremikroteilchen enthält, die ein Reaktionsprodukt enthalten, enthaltend:
i) wenigstens ein säurefunktionelles Reaktionsprodukt von ethylenisch ungesättigten Monomeren und
ii) wenigstens ein hydrophobes Polymer mit einem zahlenmittleren Molekulargewicht von wenigstens 500.

7. Verfahren nach Anspruch 1, wobei die Grundierbeschichtungszusammensetzung ein Pigmentmahlvehikel enthält, das das selbstemulgierende Polyestermikrogel enthält.

8. Mehrschichtiges Beschichtungssystem enthaltend:
a) eine Grundierbeschichtungszusammensetzung, die auf wenigstens einem Teil eines Substrats aufgebracht ist, wobei die Grundierbeschichtungszusammensetzung ein selbstemulgierendes Polyestermikrogel, enthaltend ein Polyester-Melamin-Mikrogel, enthält,
b) eine zweite Beschichtungszusammensetzung, die auf wenigstens einem Teil des Substrats, das mit der Grundierbeschichtungszusammensetzung der Komponente (a) beschichtet ist, aufgebracht ist, ohne die Grundierbeschichtungszusammensetzung der Komponente (a) wesentlich zu härten,
c) wahlweise eine dritte Beschichtungszusammensetzung, die auf wenigstens einem Teil des Substrats, das mit der Beschichtungszusammensetzung der Komponente (b) beschichtet ist, aufgebracht ist, ohne zuerst (a) und/oder (b) wesentlichen zu härten,
wobei die Beschichtungszusammensetzungen der Komponenten (a) und (b) und, falls verwendet, (c) im Wesentlichen gehärtet sind.

9. Mehrschichtiges Beschichtungssystem nach Anspruch 8, wobei die zweite Beschichtung transparent oder semitransparent ist.

## Revendications

1. Procédé de revêtement de substrat, lequel procédé comporte les étapes suivantes :
a) appliquer une composition de revêtement primaire sur au moins une partie du substrat, laquelle composition de revêtement primaire comprend un microgel de polyester auto-émulsionné, qui comprend un microgel de polyester et mélamine ;
b) appliquer une deuxième composition de revêtement sur au moins une partie du substrat revêtu de la composition de revêtement primaire de composant (a), sans d'abord faire sensiblement durcir cette composition de revêtement primaire de composant (a) ;
c) en option, appliquer une troisième composition de revêtement sur au moins une partie du substrat revêtu de la composition de revêtement de composant (b), sans d'abord faire sensiblement durcir cette ou ces composition(s) (a) et/ou (b) ;
d) et faire sensiblement durcir les compositions de revêtement de composants (a) et (b), et (c) s'il y a lieu.

2. Procédé conforme à la revendication 1, dans lequel l'une ou plusieurs des compositions de revêtement (a) et (b), et (c) s'il y a lieu, est ou sont aqueuse(s).

3. Procédé conforme à la revendication 1, dans lequel
a) le polyester du microgel de polyester et mélamine comprend un produit de réaction comprenant de l'acide isomerginique, du triméthylol-propane, de l'hexane-1,6-diol, de l'anhydride phtalique et/ou de l'anhydride trimellique,
b) ou le polyester comporte une fonction acide,
c) ou la mélamine du microgel de polyester et mélamine comprend un dérivé méthylé de mélamine, à forte proportion de groupes imino.

4. Procédé conforme à la revendication 1, dans lequel la composition de revêtement pour composant (a) comprend en outre une dispersion thermodurcissable.

5. Procédé conforme à la revendication 4, dans lequel la dispersion thermodurcissable comprend un microgel supplémentaire, différent du microgel de polyester auto-émulsionné de l'étape (a).

6. Procédé conforme à la revendication 5, dans lequel le microgel supplémentaire comprend des microparticules de polymère comprenant un produit de réaction qui comporte :
i) au moins un produit de réaction, à fonction acide, de monomères à insaturation éthylénique,
ii) et au moins un polymère hydrophobe présentant une masse molaire moyenne en nombre d'au moins 500.

7. Procédé conforme à la revendication 1, dans lequel la composition de revêtement primaire comprend un véhicule pour broyage de pigments qui contient le microgel de polyester auto-émulsionné.

8. Système de revêtement multicouche, qui comprend :
a) une composition de revêtement primaire, appliquée sur au moins une partie d'un substrat, laquelle composition de revêtement primaire comprend un microgel de polyester auto-émulsionné, qui comprend un microgel de polyester et mélamine ;
b) une deuxième composition de revêtement, appliquée sur au moins une partie du substrat revêtu de la composition de revêtement primaire de composant (a), sans que l'on ait d'abord fait sensiblement durcir cette composition de revêtement primaire de composant (a) ;
c) et en option, une troisième composition de revêtement, appliquée sur au moins une partie du substrat revêtu de la composition de revêtement de composant (b), sans que l'on ait d'abord fait sensiblement durcir cette ou ces composition(s) (a) et/ou (b) ;
et dans lequel les compositions de revêtement des composants (a) et (b), et (c) s'il y a lieu, sont sensiblement durcies.

9. Système de revêtement multicouche conforme à la revendication 8, dans lequel le deuxième revêtement est transparent ou semi-transparent.
